# EUROPÄISCHE PATENTSCHRIFT

(11) **EP 1 800 953 B1**
(45) Veröffentlichungstag und Bekanntmachung des Hinweises auf die Patenterteilung: **31.12.2008**
(21) Anmeldenummer: 06023398.8
(22) Anmeldetag: 10.11.2006
(51) Int. Cl.: B60R 7/10

(54) **Halterung für Autokleiderbügel**
Automobile clothes hanger bracket
Support de cintre pour vêtements, utilisé dans une voiture

(30) Priorität: 20.12.2005 DE 202005020002 U
(43) Veröffentlichungstag der Anmeldung: 27.06.2007
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- WO-A-00/30894
- DE-U1- 20 011 935
- DE-U1- 20 018 697
- DE-U1- 20 301 090
- DE-U1-5202004 005 87
- US-A1- 2005 224 540

## Beschreibung

Die Erfindung betrifft eine verbesserte Halterung für einen Autokleiderbügel an den Kopfstützsäulen eines Fahrzeugs.

Aus der DE 200 18 697 U1 ist ein Autokleiderbügel zur Befestigung an den Kopfstützsäulen eines Fahrzeugs bekannt, der aus einem aus Draht gebogenen Bügelkörper ausgebildet ist, dessen beide zunächst abwärts verlaufende und dann horizontal umgebogene Schenkelenden mit aufgesetzten Kunststoffhülsen versehen und in an den Kopfstützsäulen zu befestigende Steckbuchsen einsteckbar sind. Die Steckbuchsen sind dabei mit einem aus zwei Halbschalen bestehenden Befestigungskörper ausgebildet, die unter Zwischenlegung von Moosgummiplättchen zwischen sich den jeweiligen Kopfstützsäulenstab ergreifen und mittels einer Anzahl von Schrauben zusammenspannbar sind. Wenn die Haltebuchsen an den beiden Kopfstützsäulen montiert sind, kann der Kleiderbügel durch Einstecken der Schenkelenden in die Haltebuchsen an den Kopfstützsäulen fixierbar und durch Herausziehen der Schenkelenden aus den Haltebuchsen wieder von den Kopfstützsäulen lösbar ist.

Bei der bekannten Befestigungsanordnung sind zur Verbindung der beiden Halbschalen des Befestigungskörpers jeder Haltebuchse vier Schrauben vorgesehen, die senkrecht zu der in der Buchsenachse verlaufenden Trennebene zwischen den Halbschalen zu montieren sind, was etwas umständlich ist. Außerdem kann der Sitz der mit den aufgesetzten Steckhülsen versehenen Schenkelenden des Kleiderbügels in den Haltebuchsen sich beim Fahren über holprige Straßen, Schlaglöcher oder dergleichen durch die Erschütterungen möglicherweise lockern, was unerwünscht ist.

Aufgabe der Erfindung ist es, eine verbesserte Halteanordnung für einen Autokleiderbügel an den Kopfstützsäulen zu schaffen, um einerseits die Montage zu erleichtern und andererseits eine größere Haltesicherheit herbeizuführen.

Diese Aufgabe wird gemäß der Erfindung durch die im Anspruch 1 angegebene Anordnung gelöst. Vorteilhafte Ausgestaltungen der Erfindung der Erfindung sind Gegenstand der Unteransprüche.

Die erfindungsgemäße Halterung hat den Vorteil, daß sie einfacher zu montieren ist. Während bei der bekannten Halterung die in einer zur Buchsenachse parallelen Ebene geteilten Halbschalen des Befestigungskörpers mit jeweils vier Schrauben aneinander zu befestigen sind und Einschrauben von der Seite her erfordern, ist der Befestigungskörper der erfindungsgemäßen Halterung quer zur Buchsenachse geteilt und ermöglicht ein Verschrauben von der Vorderseite der Sitzlehne her, und es kann auf die Einlage von Moosgummiplättchen verzichtet werden. Durch die formschlüssige Arretierung der in die Haltebuchsen eingesteckten Schenkelenden des Kleiderbügels ist außerdem eine erschütterungsfeste Halterung gewährleistet.

Ein Ausführungsbeispiel der Halteanordnung nach der Erfindung ist in den anliegenden Zeichnungen dargestellt und wird im Folgenden mehr im einzelnen beschrieben. In den Zeichnungen zeigt:
- Fig. 1: eine auseinandergezogene geschnittene Draufsicht der Anordnung,
- Fig. 2: eine auseinandergezogene Seitenansicht der Anordnung, und
- Fig. 3: eine Stirnansicht in Richtung des Pfeils III in Fig. 1.

Wie die Zeichnungen zeigen, besteht die erfindungsgemäße Halterung aus einer Haltebuchse 1 mit einem daran gebildeten zweiteiligen Befestigungskörper 2 zur Befestigung an der jeweiligen Kopfstützsäulenstange, weiter aus einer Endhülse 3, die auf dem jeweiligen Schenkelende (nicht dargestellt) des Kleiderbügels (ebenfalls nicht dargestellt) befestigt ist, und aus einem Arretierring 4, der drehbar hinterhalb der Endhülse 3 auf dem Schenkelende des Kleiderbügels sitzt.

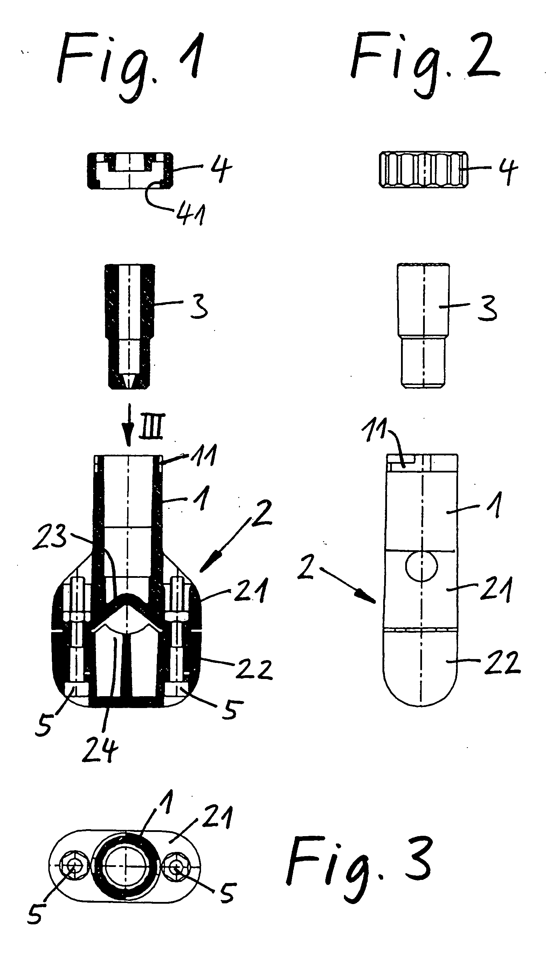

Der Befestigungskörper 2 der Haltebuchse 1 ist in einer quer zur Buchsenachse orientierten Ebene in einen mit der Buchse 1 einstückig verbundenen Befestigungskörperteil 21 und einen daran mittels Schrauben 5 befestigbaren selbständigen Befestigungskörperteil 22 geteilt. Wie aus Fig. 1 ersichtlich ist, sind die Befestigungskörperteile 21, 22 mit Elementen zum form- und kraftschlüssigen Umgreifen der Kopfstützsäulenstange ausgebildet. Beim dargestellten Ausführungsbeispiel hat das an der Buchse 1 angeformte Befestigungskörperteil 21 eine V-förmig konfigurierte Anlagewand 2, 3, um die Kopfstützsäulenstange aufzunehmen, und das andere separate Befestigungskörperteil 22 weist ein Gegendruckelement 24 auf, das eine Kreuzrippenkonfiguration mit zwei in der Zeichenebene liegenden Rippen, die an der der Kopfstützsäulenstange zugewandten Seite eine kreissegmentartige Ausbuchtung haben, und zwei senkrecht zur Zeichenebene verlaufende Rippen auf, von denen eine geschnitten dargestellt ist. Beim Verschrauben der beiden Haltekörperteile 21 und 22 mittels der Schrauben 4 wird mittels der an der Kopfstützsäulenstange anliegenden Elemente 23 und 24 des Haltekörpers 2 der Haltekörper und somit die gesamte Haltebuchse fest an der Kopfstützsäulenstange verspannt.

Die Endhülse 3, die im Gebrauch am Schenkelende des Kleiderbügels befestigt ist, dient als Steckzapfen und somit als mit der Buchse 1 zusammenwirkendes Steckelement. Die schwach konische Form der Endhülse 3 bewirkt einen festen und selbsthemmenden Sitz in der Buchse 1.

Die Haltebuchse ist, wie aus Fig. 2 erkennbar ist, an ihrem Mündungsöffnungsrand mit Bajonettverriegelungselementen 11 oder ähnlichen Arretierungselementen versehen, wobei es sich auch um ein ein- oder mehrgängiges Schraubgewinde handeln kann. Der hinterhalb der Endhülse 3 auf dem (nicht dargestellten) Schenkelende des Kleiderbügels sitzende Arretierring 4 ist, wie Fig. 1 erkennen lässt, mit komplementären Arretierelementen 41 versehen. Die Anordnung, nämlich die Bemessung der Buchse 1, die Bemessung der Endhülse 3, und die Ausbildung und Bemessung des Arretierrings 4, ist so getroffen, daß bei in die Buchse 1 eingestecktem, durch die Endhülse 3 gebildetem Steckzapfen der Arretierring 4 mit seinen Arretierelementen 41 drehend in Verriegelungseingriff mit den Arretierelementen 11 der Buchse gebracht werden kann.

## Patentansprüche

1. Halterung für Autokleiderbügel an den beiden Kopfstützsäulenstangen eines Fahrzeugs, bestehend aus jeweils einer an der betreffenden Kopfstützsäulenstange montierbaren Haltebuchse zur lösbaren Aufnahme eines am Kleiderbügel angeordneten Steckzapfens, wobei die Haltebuchse aus einer Buchse (1) und einem damit verbundenen Befestigungskörper (2) besteht, der in einer quer zur Buchsenachse verlaufenden Ebene in zwei Teile (21, 22) unterteilt ist, die mittels zur Buchsenachse paralleler Schrauben (5) zusammenspannbar sind und die komplementäre, form- und kraftschlüssig mit der jeweiligen Kopfstützsäulenstange zusammenwirkende Elemente (23, 24) haben.

2. Halterung nach Anspruch 1, wobei das am einen Befestigungskörperteil (21) gebildete Element (23) eine die Kopfstützsäulenstange aufnehmende V-artige Rinne bildet und das am anderen Befestigungskörperteil (22) gebildete Element (24) als Druckstück mit konkav gewölbter Anlagefläche ausgebildet ist.

3. Halterung nach Anspruch 1 oder 2, wobei die Buchse (1) einstückig mit einem der Befestigungskörperteile (21) ausgebildet ist.

4. Halterung nach einem der Ansprüche 1 bis 3, wobei die Buchse (1) in ihrem Mündungsbereich mit Verriegelungsmitteln (11) und der Steckzapfen des Kleiderbügels mit einem damit formschlüssig zusammenwirkenden Arretierring (4) mit zu den Verriegelungsmitteln (11) der Buchse (1) komplementären Verriegelungsmitteln (41) ausgebildet ist.

5. Halterung nach Anspruch 4, wobei die Verriegelungsmittel (11, 41) Drehverriegelungsmittel sind.

6. Halterung nach Anspruch 4 oder 5, wobei jeder Steckzapfen des Kleiderbügels durch ein Drahtende mit einer aufgesetzten Endhülse (3) ausgebildet ist und der Arretierring (4) hinter der Endhülse (3) auf dem Drahtende sitzt.

## Claims

1. Bracket for automobile clothes hangers on the two headrest upright rods of a vehicle, comprising in each case a holding bush mountable on the respective headrest upright rod for detachably receiving a plug-in spigot disposed on the clothes hanger, wherein the holding bush comprises a bush (1) and a fastening body (2) connected thereto, which in a plane extending transversely of the bush axis is subdivided into two parts (21, 22), which may be clamped together by means of screws (5) extending parallel to the bush axis and which have complementary elements (23, 24) that interact positively and non-positively with the respective headrest upright rod.

2. Bracket according to claim 1, wherein the element (23) formed on the one fastening body part (21) forms a V-like channel that receives the headrest upright rod, and the element (24) formed on the other fastening body part (22) takes the form of a thrust piece having a concavely curved contact surface.

3. Bracket according to claim 1 or 2, wherein the bush (1) is formed integrally with one of the fastening body parts (21).

4. Bracket according to one of claims 1 to 3, wherein the bush (1) in its mouth region is designed with locking means (11) and the plug-in spigot of the clothes hanger is designed with a retaining ring (4) interacting positively therewith and having locking means (41) complementary to the locking means (11) of the bush (1).

5. Bracket according to claim 4, wherein the locking means (11, 41) are rotary locking means.

6. Bracket according to claim 4 or 5, wherein each plug-in spigot of the clothes hanger is formed by a wire end with an end sleeve (3) mounted thereon and the retaining ring (4) is seated on the wire end behind the end sleeve (3).

## Revendications

1. Support pour cintre à vêtement de voiture sur les deux tiges de colonne d'appui-tête d'un véhicule à moteur, comprenant chacun une douille de support pouvant être montée sur la tige de colonne d'appui-tête correspondante, destinée à recevoir de manière amovible un pivot d'emboîtement disposé sur le cintre à vêtement, la douille de support étant constituée d'une douille (1) et d'un corps de fixation (2) relié à celle-ci, lequel est divisé, dans un plan s'étendant transversalement à l'axe de la douille, en deux parties (21, 22) qui peuvent être vissées ensemble au moyen de vis (5) parallèles à l'axe de la douille et qui ont des éléments (23, 24) complémentaires coopérant de manière solidaire avec correspondance de forme et par une liaison dynamique avec la tige de colonne d'appui-tête correspondante.

2. Support selon la revendication 1, dans lequel l'élément (23) formé sur une partie de corps de fixation (21) forme une gorge en forme de V recevant la tige de colonne d'appui-tête et l'élément (24) formé sur l'autre partie de corps de fixation (22) est réalisé sous la forme de pièce d'appui avec une surface de contact bombée de façon concave.

3. Support selon la revendication 1 ou 2, dans lequel la douille (1) est réalisée d'une seule pièce avec une des parties de corps de fixation (21).

4. Support selon l'une quelconque des revendications 1 à 3, dans lequel la douille (1) est réalisée dans sa zone d'embouchure avec des moyens de verrouillage (11) et le pivot d'emboîtement du cintre à vêtement, avec une bague d'arrêt (4) coopérant avec celui-ci de manière solidaire avec correspondance de forme, est réalisé avec des moyens de verrouillage (41) complémentaires des moyens de verrouillage (11) de la douille (1).

5. Support selon la revendication 4, dans lequel les moyens de verrouillage (11, 41) sont des moyens de verrouillage par rotation.

6. Support selon la revendication 4 ou 5, dans lequel chaque pivot d'emboîtement du cintre à vêtement est réalisé par une extrémité de tige métallique avec un manchon d'extrémité (3) posé dessus et la bague d'arrêt (4) est placée derrière le manchon d'extrémité (3) sur l'extrémité de tige métallique.
